# EUROPÄISCHE PATENTANMELDUNG

(11) **EP 2 581 757 A1**
(43) Veröffentlichungstag der Anmeldung: **17.04.2013**
(21) Anmeldenummer: 11190618.6
(22) Anmeldetag: 24.11.2011
(51) Int. Cl.: G01S 5/06, G01S 5/14

(54) **Anordnung zur Identifikation und Ortung von Objekten, insbesondere von beweglichen Objekten wie Baugeräten und fahrbaren Maschinen und Ausrüstungen und Verfahren zu deren Anwendung**

(30) Priorität: 13.10.2011 DE 202011106717 U
(71) Anmelder: identoloc GmbH, 12359 Berlin (DE)
(72) Erfinder: Pauthner, Georg, Dr., 12359 Berlin (DE)
(74) Vertreter: Neumann, Günter

(57) **Zusammenfassung**

Die Erfindung betrifft eine Anordnung und ein Verfahren zur Identifikation und Ortung von Objekten, insbesondere von beweglichen Objekten einschließlich Personen, wobei die Anordnung umfasst,
- mindestens einen an dem Objekt angeordneten Identifikations-Sender mit einer weltweit eindeutigen Kennung,
- ein Kommunikations-Element mit einer weltweit eindeutigen Kennung, das Informationsbotschaften des Identifikations-Senders empfängt und selbst Kommunikationsbotschaften an ein Steuerungs-Zentrum sendet, das die Zuordnung der Identifikations-Sender zu dem Objekt verwaltet, alle Informationen speichert, verknüpft und auswertet und einem Nutzer freigibt;
- die Kommunikation zwischen dem Identifikations-Sender und dem Kommunikations-Element zu den Informationsbotschaften hergestellt mittels eines Identifikations-Funk-Netzwerk;
- die Kommunikation zwischen dem Kommunikations-Element und dem Steuerungszentrum hergestellt mittels eines Kommunikationsnetzes;
- ein Positionierungssystem, das dem Kommunikations-Element zu jedem
Zeitpunkt eine eindeutige Geo-Position zuordnet
wobei zum Zweck einer geringen Fehlertoleranz
- im Fall der Zuordnung nur eines Identifikations-Senders zu dem Objekt dieser zeitgleich mit mindestens zwei Kommunikations-Elementen kommuniziert oder
- im Fall der Zuordnung von mindestens zwei Identifikations-Sendern zu dem Objekt diese mit mindestens einem Kommunikations-Element kommunizieren.

## Beschreibung

Die Erfindung bezieht sich auf eine Anordnung zur Identifikation und Ortung von Objekten, insbesondere von beweglichen Objekten wie Baugeräten und fahrbaren Maschinen und Ausrüstungen sowie auf ein Verfahren zur Anwendung der Anordnung.

Fortschritte in der Elektronik, bei der drahtlosen Kommunikation und bei der Entwicklung von Geräten für die globale Positionierung haben zu verschiedenen Ortungs- und Identifizierungs-Systemen geführt. Derartige Systeme gibt es sowohl für die ldentifizierung und Ortung von Gegenständen, Fahrzeugen und Personen.

Die Systeme dienen neben der genauen Positionsbestimmung der Objekte deren Überwachung, bei Baumaschinen des Schutzes vor unbefugter Benutzung, der Überwachung deren Aktionsradius. Werte wie Kilometerstand, Betriebsstunden, Mengenmesser, Öldruck und Öltemperatur können bei entsprechender Ausgestaltung der Systeme abgefragt und übermittelt werden.

Es ist typisch, dass bei derartigen Systemen am Objekt platzierte Identträger eingesetzt werden. Diese Identträger unterscheiden sich in Bezug auf solche Faktoren wie Energieverbrauch und ob es sich um passive, semi-passive und aktive ldentträger handelt, ob sie ein nur ein eingehendes Signal siegeln oder Signale aktiv senden oder die von außen abgefragt werden können. Aktive ldentträger sind batteriebasiert und senden Signale aus.

In einem gewissen Abstand von den Identträgern sind Signalaufnahmevorrichtungen positioniert, welche in der Regel mit einer Kontrollzentrale verbunden sind. Je nachdem welche Auflösung angestrebt wird, werden mehrere derartiger Signalaufnahmevorrichtungen angewendet.

So geht aus DE 10 2007 039 451 A1 ein System zur Ortung beweglicher Objekte hervor, das aus ortsfesten Signalaufnahmevorrichtungen und mindestens einer Kontrollzentrale aufgebaut ist, wobei die Kommunikation zwischen den Signalaufnahmevorrichtungen und der Kontrollzentrale mittels elektrischer Nahfeldkommunikation. Wenn ein Identträger durch eine Signalaufnahmevorrichtung in deren Empfangsbereich erkannt wird, liest diese die im ldentträger enthaltenen Informationen aus und leitet sie zusammen mit einer die Signalaufnahmevorrichtung kennzeichnenden Information auf dem Weg der Nahfeldkommunikation an die Kontrollzentrale weiter. Die Kontrollzentrale erhält dadurch Kenntnis von der lokalen Position des Identträgers und damit des jeweiligen Objektes, denn die Position der Signalaufnahmevorrichtung ist der Kantrollzentrale bekannt.

Ein Verfahren und System zur Transport- und Positionsüberwachung beweglicher, mit unterschiedlichen Transportmitteln bewegter Waren, Güter oder dergleichen Objekte beschreibt die DE 197 55 142 B4. Das Verfahren umfasst das lösbare Anbringen eines miniaturisierten Hochfrequenzsendersan einer Frachtgutdokumentation mit einer Identifizierungskennzeichnung, wobei der Sender nach einem externen, ferngesteuerten Freischalten in vorgegebenen, programmierbaren Zeitabständen ein das Objekt eindeutig definierendes Datentelegramm sendet, das von Empfangsstationen eines GSM-Telekommunikationsnetzes und/oder von geostationären Ortungssatelliten empfangen wird, die empfangenen Daten laufend aufgezeichnet und der jeweilige Sendeort lokalisiert werden, die aufgezeichneten Positions- und Transportwegedaten zum jeweiligen Objekt mittels eines regionalen oder kontinentalen Datenkommunikationsnetzes auf Anfrage übertragen werden.

US 7,123,149 B2 und US 7,336,181 B2 offenbart ein ldentifizierzungs- und Überwachungssystem für Vermögenswerte und Personen das sich der Techniken RFID und GPS bedient, wobei die RFID-Technik sich auch den Einsatzes von aktiven Transpondern vorsieht. Die Daten des jeweiligen Objektes werden von einem Informationssystem gesammelt und verarbeitet. RFID-Etiketten an Gegenständen und Personen werden durch Lesegeräte, die auch mobil ausgeführt und mittels GPS geortet werden können ausgelesen und die erhaltenen Informationen an das Informationssystem weitergeleitet und zur Identifizierung und Überwachung anschließend ausgewertet werden.

Mit den genannten technischen Lösungen verbindet sich jedoch das Problem, dass ihre mechanische Belastbarkeit, die elektromagnetische Störempfindlichkeit und auch Temperaturempfindlichkeit und damit ihre Zuverlässigkeit und Verfügbarkeit für die Identifikation und Ortung von Objekten und insbesondere die Ermittlung eines Bewegungspfades der betreffenden Objekte meist erheblich eingeschränkt sind. Sie sind darüber hinaus in der Regel nicht kostengünstig herstellbar sind und insbesondere für einen robusten Einsatz, wie er bei der Ortung und ldentifizierung zum Beispiel von Baugeräten und -maschinen zu verzeichnen wäre, nicht geeignet sind.

Aufgabe der Erfindung ist es daher, eine verbesserte und wirtschaftlich günstige Anordnung für eine zuverlässige Identifikation und Ortung sowie zur Ermittlung des Bewegungspfades von beweglichen Objekten, insbesondere von Baugeräten und -maschinen in einem störungsintensiven Umfeld und ein Verfahren zur Anwendung der Anordnung bereitzustellen.

Erfindungsgemäß wird die Aufgabe zur Identifikation und Ortung von Objekten, insbesondere von beweglichen Objekten wie Baugeräten und fahrbaren Maschinen, Ausrüstungen und Personen durch eine Anordnung gelöst, umfassend mindestens einen an dem Objekt angeordneten ldentifikations-Sender mit einer weltweit eindeutigen Kennung, ein Kommunikations-Element mit einer weltweit eindeutigen Kennung, das Informationsbotschaften des Identifikations-Senders empfängt und selbst Kommunikationsbotschaften an ein Steuerungs-zentrum sendet, das die Zuordnung der ldentifikations-Sender zu den Objekten verwaltet, alle Informationen speichert, verknüpft und auswertet und einem Nutzer freigibt, wobei die Kommunikation zwischen dem Identifikations-Sender und dem Kommunikations-Element durch Informationsbotschaften erfolgt und mittels eines Identifikations-Funk-Netzwerkes hergestellt ist, die Kommunikation zwischen dem Kommunikations-Element und dem Steuerungszentrum mittels eines Kommunikationsnetzes hergestellt ist, ein Positionierungssystem dem Kommunikations-Element zu jedem Zeitpunkt eine eindeutige Geo-Position zuordnet und zum Zweck einer geringen Fehlertoleranz im Fall der Zuordnung nur eines Identifikations-Senders zu einem Objekt dieser zeitgleich mit mindestens zwei Kommunikations-Elementen kommuniziert oder im Fall der Zuordnung von mindestens zwei Identifikations-Sendern zu einem Objekt diese zeitgleich mit mindestens einem Kommunikations-Element kommunizieren.

Mit der Erfindung verbindet sich der Vorzug, dass eine wirtschaftlich sinnvolle und eine zuverlässig arbeitende neue technische Lösung bereitgestellt werden. Die Anordnung ist robust gegen Störungen und ist mit nur einem sehr geringen Installationsaufwand verbunden. Die Investitionskosten für die gesamte Anordnung sind wesentlich geringer als die Investitionskosten für die Objekte.

Eine besondere Ausführungsform der Erfindung sieht vor, dass das Steuerungs-Zentrum mindestens zwei Kommunikationsnetzwerke zum Austausch der Kommunikations-Botschaften verbindet.

Nach einer weiteren Ausführungsform wird als weltweit eindeutige Kennung eine IP6-Adresse oder eine innerhalb einer Produktfamilie eindeutige Kennung verwendet

Gemäß einer bevorzugten Ausführungsform ist jeder vom Kommunikations-Element empfangenen lnformationsbotschaft des Identifikations-Sender ein mit der UTC (Universal Time Coordinated) synchronisierter Zeiteingangsstempel zugeordnet ist, wobei die Abweichung von der UTC signifikant kleiner als der minimale Zeitabstand von zwei aufeinander folgenden Signalen eines Identifikations-Sender ist.

Bevorzugt ordnet das Positionierungssystem die Geo-Position dem Kommunikations-Element indirekt und statisch oder dynamisch mittels eines mit dem Kommunikations-Element verbundenen GPS-Empfängers zu.

Eine weitere besonders bevorzugte Ausführungsform der Erfindung sieht vor, dass im Fall der Zuordnung von zwei Identifikations-Sendern zu einem Objekt ein Identifikations-Sender zeitgleich mit zwei Kommunikations-Elementen drahtlos kommuniziert und der andere Identifikations-Sender für sich betrachtet ebenfalls zeitgleich mit den gleichen Kommunikations-Elementen drahtlos kommuniziert.

Nach einer Ausführungsform kommuniziert die Anordnung im Outdoor- oder Indoor-Bereich oder Outdoor zu Indoor oder umgekehrt.

Bevorzugt nutzt das Identifikations-Funk-Netz IF der Anordnung die Frequenzen 125 kHz bis 134 kHz, 13,56 MHz, 850 MHz bis 950 MHz und/oder 2,45 GHz bis 2,5 GHz oder 5,8 GHz und das Kommunikationsnetz KN der Anordnung im Outdoor-Bereich Mobilfunk und im Indoor-Bereich WLAN.

Erfindungsgemäß wird die Aufgabe zur Identifikation und Ortung von Objekten, insbesondere von beweglichen Objekten wie Baugeräten und fahrbaren Maschinen und Ausrüstungen sowie Personen mit der genannten Anordnung gemäß den Ansprüchen 1 bis 8 durch ein Verfahren gelöst, das folgende Schritte umfasst
- von einem an einem Objekt angeordneten Informations-Sender mit einer eindeutigen Absender-Identifikation in periodischen Abständen Informationsbotschaften gesendet werden;
- von jedem Kommunikations-Empfänger die in seinen Bereich gesendeten Informationsbotschaften empfangen werden;
- vom Kommunikations-Element jeder von ihm empfangenen Informationsbotschaft ein Empfangszeitstempel zugeordnet wird;
- jeder von dem Kommunikationselement empfangenen Informationsbotschaft von diesem ein Empfangszeitstempel zugeordnet wird;
- vom Kommunikations-Element auf der Grundlage der von einem oder mehreren Informations-Sendern empfangenen Informationsbotschaften Kommunikationsbotschaften erstellt und mit eindeutiger Kennung des Kommunikations-Elementes und unter Zuordnung der jeweiligen Zeiteingangsstempel der Informationsbotschaften an das Steuerungs-Zentrum gesendet werden;
- vom Steuerungs-Zentrum auf der Grundlage der eindeutigen Senderkennung des Kommunikations-Elementes in der Kommunikationsbotschaft, dem in der Kommunikationsbotschaft enthaltenen Empfangszeitstempel der Informationsbotschaft mittels des Positionierungssystems die zum Zeitpunkt des Empfanges der Informationsbotschaft gültige Geo-Position des Kommunikations-Elementes ermittelt wird, so dass das Tripel Kennung des Informations-Senders, Zeitpunkt des Empfangs der Informationsbotschaft und die Geo-Position des empfangenden Kommunikations-Elementes festgestellt werden kann;
- vom Steuerungs-Zentrum können anschließend die Tripel korreliert und daraus die Position eines Objektes und/oder dessen Bewegungspfad bestimmt werden.

Eine besondere Ausführungsform des erfindungsgemäßen Verfahrens sieht vor, dass vom Kommunikations-Element der von dem Informations-Sender empfangenen Informationsbotschaft weitere Informationen, vorzugsweise die maximale Reichweite Kommunikation zwischen dem Informations-Sender und dem Kommunikations-Element oder die relative Empfangsfeldstärke zugeordnet werden.

Gemäß einer weiteren Ausführung kann durch Berechnung von Bewegungsgeschwindigkeit und -richtung des Objektes und die Auswertung der verschiedenen Empfangs-Zeitpunkten eine eventuelle Unschärfe der Geo-Position des Objektes eingegrenzt werden.

Des Weiteren kann durch die Einbeziehung und Auswertung weiterer Parameter, vorzugsweise der maximalen Reichweite zwischen Informations-Sender und Kommunikations-Element sowie der relativen Empfangsfeldstärke die Qualität der Positionsbestimmung verbessert werden.

Eine besonders bevorzugte Ausführungsform des erfindungsgemäßen Verfahrens sieht vor, das aus verschiedenen Empfangs-Zeitpunkten und Geo-Positionen des Kommunikations-Elementes (KE) die Bewegungsgeschwindigkeit und -richtung des Objektes ermittelt und erforderlichenfalls die Geo-Position des Objektes bestimmt werden kann.

Eine weitere Ausführungsform sieht vor, dass im Outdoor- oder Indoor-Bereich oder Outdoor zu Indoor oder umgekehrt kommuniziert wird.

Vorteilhafterweise ist vorgesehen, dass das Identifikations-Funk-Netz IF der Anordnung die Frequenzen 125 kHz bis 134 kHz, 13,56 MHz, 850 MHz bis 950 MHz und/oder 2,45 GHz bis 2,5 GHz oder 5,8 GHz und das Kommunikationsnetz KN der Anordnung im Outdoor-Bereich Mobilfunk und im Indoor-Bereich WLAN nutzt.

Im Folgenden soll die Erfindung an Hand von Beispielen näher erläutert werden. Es zeigen
- **Figur 1:**: eine Ausführungsform der erfindungsgemäßen Anordnung unter Einsatz von 1 Identifikations-Sender,
- **Figur 2:**: eine weitere Ausführungsform der erfindungsgemäße Anordnung unter Einsatz von 2 Identifikations-Sendern.

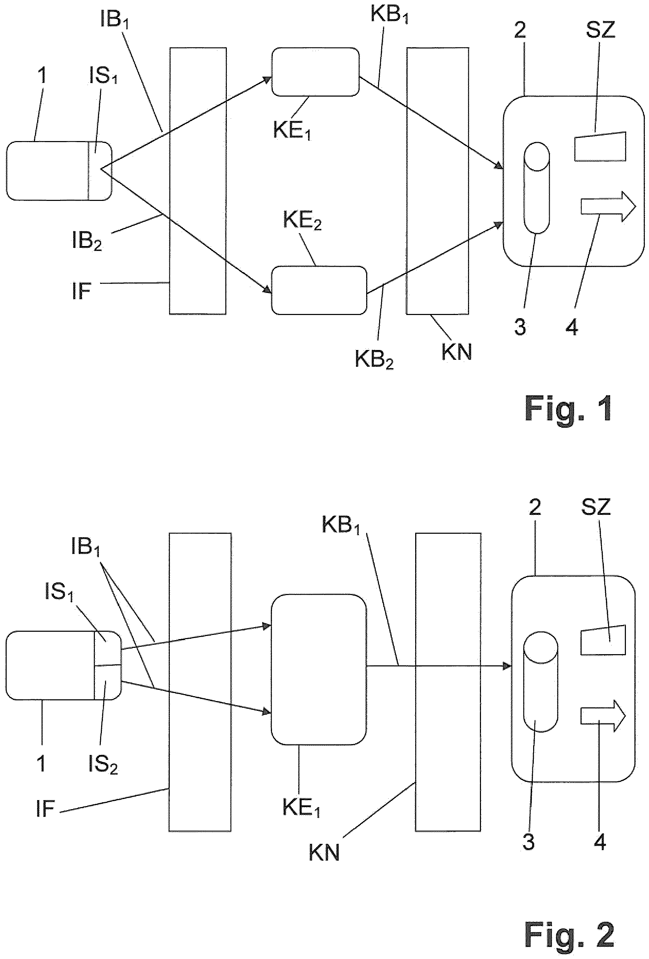

Wie aus **Fig. 1** ersichtlich, ist das Objekt 1, im vorliegende Fall soll es ein mobiles Baugerät darstellen, mit einem einzigen ldentifikations-Sender IS₁ ausgestattet. Das mobile Baugerät kann beispielsweise eine Baggerschaufel, eine Motorsäge oder ein Betonmischer sein. Typischerweise handelt es sich um Geräte, die nicht an eine Stromversorgung angeschlossen sind.

Der Identifikations-Sender IS₁ besitzt eine weltweit eindeutige Kennung in Gestalt einer offiziellen IP6-Adresse und sendet in einstellbaren periodischen Abständen zeitgleich jeweils die gleichen Informationsbotschaften IB₁ und IB₂, die als Absender-Identifikation eine eindeutige IS₁ -Kennung erhält, an die Kommunikations-Elemente KE₁ und KE₂. Je nach der Anwendung der erfindungsgemäßen Anordnung kann die Informationsbotschaft IB₁ und IB₂ noch weitere Daten enthalten, zum Beispiel Informationen über die Energieversorgung des Identifikations-Senders IS₁. Jeder empfangenen Informationsbotschaft IB₁ und IB₂ wird durch die Kommunikations-Elemente KE₁ und KE₂ ein mit der Universal Time Coordinated (UTC) synchronisierter Empfangszeitstempel zugeordnet, wobei die Abweichung der Zeitbasis von der UTC signifikant kleiner als der minimale Zeitabstand von 2 aufeinanderfolgenden Botschaften IB₁. IB₂ des Identifikatlons-Senders IS₁ ist. Die Kommunikations-Elemente KE₁ und KE₂ können der Informationsbotschaft IB₁ und IB₂ weitere von ihr ermittelte Daten, wie z.B. die relative Empfangsfeldstärke und/oder die maximale Reichweite der IS₁ KE₁ und KE₂ -Kommunikation zuordnen.

Es versteht sich, dass sowohl der Identifikations-Sender IS₁ als auch die Kommunikations-Elemente KE₁ und KE₂ mobil angeordnet sein können.

Typischerweise verfügen die Kommunikations-Elemente KE₁ und KE₂ über eine gesicherte Stromversorgung. Sie können stationär betrieben werden oder sie sind auf mobilen Baumaschinen angeordnet.

Die maximale relative Geschwindigkeit von einem Kommunikations-Element KE und einem Identifikations-Sender IS sind so zu wählen, dass bei Kenntnis der Reichweite des Identifikations-Senders IS und der Wiederholfrequenz der gesendeten Informationsbotschaft IB ein gesicherter Empfang der Informationsbotschaft IB gewährleistet ist.

Die Kommunikation zwischen dem Identifikations-Sender IS₁ und den Kommunikations-Elementen KE₁ und KE₂ wird durch das Identifikations-Funk-Netzwerk IF gesichert. Die Abweichung der lokalen Uhren der Kommunikations-Elementen KE₁ und KE₂ von der Universal Time Coordinated (UTC) ist kleiner als ein Viertel des minimalen Zeitabstandes zwischen 2 aufeinander folgenden Informationsbotschaften IB₁ und IB₂.

Für das Identifikations-Funk-Netzwerk IF können die für RFID freigegebenen Frequenzbereiche genutzt werden, so z.B. im Langwellenbereich 125 kHz - 134 kHz, im Kurzwellenbereich 13,56 MHz, im UHF-Bereich 850 GHz - 950 MHz und im SHF-Bereich 2,45 GHz - 2,5 GHz oder 5,8 GHz. Die unterschiedlichen elektromagnetischen Eigenschaften der Frequenzen, so zum Beispiel hinsichtlich ihrer Reihweite und der Durchdringung von Materialien können auf diese Weise vorteilhaft ausgenutzt werden.

Die Kommunikations-Elemente KE₁ und KE₂ sind ebenfalls mit einer weltweit eindeutigen Kennung versehen, zum Beispiel einer statischen IP-Adresse. Außerdem ist jedem Kommunikations-Element KE₁ und KE₂ eine Geo-Position (mit Breitengrad und Längengrad) zugeordnet. Diese Zuordnung kann indirekt und statisch festgelegt sein (zum Beispiel durch Umrechnung der postalischen Adresse in Geo-Koordinaten) oder auch dynamisch durch einen mit dem Kommunikations-Element KE₁ und KE₂ verbundenen GPS-Empfänger erfolgen.

Die Kommunikations-Elemente KE₁ und KE₂ selbst senden die Kommunikationsbotschaften KB₁ und KB₂ an das in dem Kontroll-Zentrum 2 vorgesehene Steuerungszentrum SZ. Die Kommunikationsbotschaften KB₁ und KB₂ enthalten eine oder mehrere Informationsbotschaften IB₁ und IB₂ einschließlich des jeweils zugeordneten Empfangszeitstempel.

Dem Steuerungszentrum SZ kommt die Funktion zu, die Zuordnung des Identifikations-Senders IS₁ zu dem Objekt 1 zu verwalten, die erhalten Informationen in dem Speicher 3 zu erfassen, sie zu verknüpfen und auszuwerten sowie die Freigabe 4 an den Nutzer wahrzunehmen. Gesichert wird diese Kommunikation durch das Kommunikationsnetzwerk KN.

Das Steuerungszentrum SZ ermittelt an Hand der eindeutigen KE₁, KE₂-Senderkennung in der Kommunikationsbotschaft KB₁. KB₂ und den in der Kommunikationsbotschaft KB1. KB₂ enthaltenen Empfangszeitstempel der Informationsbotschaft IB₁, IB₂, die zum Empfangszeitpunkt der Informationsbotschaft IB₁, IB₂ gültige GEO-Position der KE₁, KE₂.

Für jede von den Kommunikations-Elementen KE₁, KE₂empfangene Informationsbotschaft IB₁. IB₂ kann auf diesem Wege das Tripel
- IS₁-Kennung
- Empfangszeitpunkt der IB₁, IB₂ und
- Geo-Position der empfangenden Kommunikations-Elementen KE₁, KE₂
erstellt werden.

Das Steuerungs-Zentrum SZ korreliert erstellte Tripel und ermittelt daraus die Position des Objektes 1. Durch Berechnung von Bewegungsgeschwindigkeit und -richtung und der die Auswertung der Abweichung der verschiedenen Empfangs-Zeitpunkte der Informationsbotschaften IB₁, IB₂ kann die Unschärfe der Geo-Position eingegrenzt werden.

Durch die Einbeziehung und Auswertung weiterer Parameter, wie z.B. der maximalen Reichweite zwischen dem Identifikations-Sender IS₁ und dem Kommunikations-Element KE₁, KE₂, der relativen Empfangsfeldstärke und/oder der maximalen Messungsgenauigkeit der Geo-Position kann die Qualität der Positionsbestimmung des Objektes 1 verbessert werden.

Im Unterschied zu **Fig. 1** zeigt **Fig.2** eine Ausführungsform der erfindungsgemäßen Anordnung, bei der dem Objekt 1 zwei Identifikations-Sender IS₁, IS₂ zugeordnet sind, die beide mit ein und demselben Kommunikations-Element KE₁ kommunizieren. Sie können jedoch auch mit mehreren Kommunikations-Elementen, z.B. zwei derartigen Elementen kommunizieren. Sofern dies der Fall ist, kommuniziert der Identifikations-Sender IS₁, zeitgleich mit den Kommunikations-Elementen KE₁ und KE₂. und der Identifikations-Sender IS₂ unsynchronisiert, also unabhängig vom Identifikations-Sender IS₁, für sich genommen zeitgleich mit den Kommunikations-Elementen KE₁ und KE₂, die - wie zu Fig. 1 beschrieben - Kommunikationsbotschaften an das Steuerungszentrum SZ senden.

Zur Erhöhung der Zuverlässigkeit der erfindungsgemäßen Anordnung können 2 Identifikations-Sender IS₁, IS₂ verwendet werden, die jeweils mit unterschiedlichen Identifikations-Funk-Netzen IF und jeweils mit 2 unterschiedlichen Kommunikations-Elementen KE₁ und KE₂ kommunizieren.

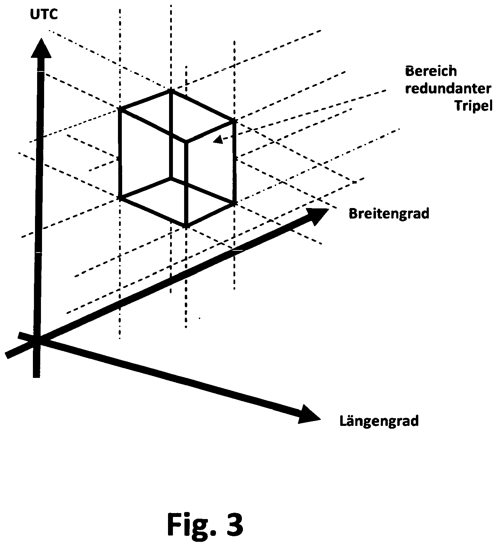

Wenn die Abweichung der Geo-Position des Objektes 1 und die für die redundanten Kommunikations-Elemente KE₁ und KE₂.ermittelten Geo-Positionen innerhalb einer vorgegebenen Abweichung liegen und die Empfangszeit-Stempel der Informationsbotschaften IB₁, IB₂ ebenfalls innerhalb einer vorgegeben Abweichung liegen, folgt daraus, dass alle redundanten Tripel innerhalb eines begrenzten Bereiches liegen müssen. Die Informations-Transportwege vom Objekt 1 zu den Kommunikations-Elementen KE₁ und KE₂ sind redundant ausgelegt. Der Ausfall eines der Identifikations-Sender IS₁ oder IS₂ oder der Verlust einer Informationsbotschaft, z.B. durch Funkabschottung werden toleriert **(****Fig. 3****).**

Es ist ein besonderer Vorzug der Erfindung, dass die Anordnung fehlerfrei funktioniert, wenn mindestens eine der redundanten Informationsbotschaften vom Steuerungszentrum SZ empfangen wird.

Bei der Ausführungsform gemäß **Fig. 1** erfüllt die Anordnung ohne Einschränkung ihre Aufgabe, wenn mindestens 1 von 2 oder mehr Kommunikations-Elementen KE1, KE₂ KE₁ funktionsfähig ist.

Bei der Ausführungsform gemäß **Fig. 2** verfüllt die Anordnung ohne Einschränkung ihre zugewiesene Aufgabe, wenn mindestens 1 von 2 oder mehr Identifikations-Sendern funktionsfähig ist, das heißt auch dann, wenn der Verlust einer Informationsbotschaft IB₁ oder IB₂ durch Funkabschottung festzustellen ist.

Eine Verbesserung der Qualität der Ergebnisse ist zudem erreichbar, wenn das Steuerungszentrum SZ2 oder mehrere redundante Informationsbotschaften empfängt und diese einer Mittelung unterzogen werden.

Ein weiterer bedeutender Vorzug der Erfindung ist die inhärente Fähigkeit zur Realisierung des Überganges von Outdoor zu Indoor und umgekehrt. Ist bei der Ausführungsform gemäß **Fig.1** das Kommunikations-Element KE₁ z.B. eine mobile Kommunikationseinheit mit einem integrierten GPS-Empfänger, das über ein Funknetz, z.B. GPRS/UMTS mit einer Steuerungszentrale kommuniziert und ist das Kommunikations-Element KE₂eine stationäre Kommunikationseinheit, die innerhalb eines Gebäudes installiert ist und ein zum Beispiel bereits existierendes WLAN nutzt, so kann mit der erfindungsgemäßen Anordnung eine nahtlose Outdoor/Indoor-Verfolgung eines mit dem Identifikations-Sender IS verbundenen Objektes realisiert werden, ohne dass irgendwelche weiteren Administrationsaktionen nötig wären.

### BEZUGSZEICHENAUFSTELLUNG

- 1: Objekt
- 2: Kontroll-Zentrum
- 3: Speicher
- 4: Datenausgabe
- IS: Identifikations-Sender
- IS₁: Identifikations-Sender
- IS₂: Identifikations-Sender
- IB₁: Informationsbotschaft
- IB₂: Informationsbotschaft
- IF: Identifikations-Funk-Netzwerk
- KE: Kommunikations-Element
- KE₁: Kommunikations-Element
- KE₂: Kommunikations-Element
- KB₁: Kommunikations-Botschaft
- KB₂: Kommunikations-Botschaft
- KB₃: Kommunikations-Botschaft
- KN: Kommunikations-Netzwerk
- KN₁: Kommunikations-Netzwerk
- KN₂: Kommunikations-Netzwerk
- SZ: Steuerungszentrum

## Patentansprüche

1. Anordnung zur Identifikation und Ortung von Objekten, insbesondere von beweglichen Objekten wie Baugeräten und fahrbaren Maschinen und Ausrüstungen sowie Personen umfassend
- mindestens einen an dem Objekt (1) angeordneten Identifikations-Sender (IS) mit einer weltweit eindeutigen Kennung,
- ein Kommunikations-Element (KE₁, KE₂) mit einer weltweit eindeutigen Kennung, das Informationsbotschaften IB₁, IB₂) des Identifikations-Senders (IS₁, IS₂) empfängt und selbst Kommunikationsbotschaften (KB₁, KB₂) an ein Steuerung-Zentrum (SZ) sendet, das die Zuordnung der Identifikations-Sender (IS₁, IS₂) zu dem Objekt (1) verwaltet, alle Informationen speichert, verknüpft und auswertet und einem Nutzer freigibt;
- die Kommunikation zwischen dem Identifikations-Sender (IS₁, IS₂) und dem Kommunikations-Element (KE₁, KE₂) zu den Informationsbotschaften (IB₁, IB₂) hergestellt mittels eines Identifikations-Funk-Netzwerk (IF);
- die Kommunikation zwischen dem Kommunikations-Element (KE₁, KE₂) und dem Steuerungszentrum (SZ) hergestellt mittels eines Kommunikationsnetzes (KN);
- ein Positionierungssystem, das dem Kommunikations-Element (KE₁, KE₂) zu
jedem Zeitpunkt eine eindeutige Geo-Position zuordnet
wobei zum Zweck einer geringen Fehlertoleranz
- im Fall der Zuordnung nur eines Identifikations-Senders (IS₁) zu dem Objekt (1) dieser zeitgleich mit mindestens zwei Kommunikations-Elementen (KE₁; KE₂) kommuniziert
oder
- im Fall der Zuordnung von mindestens zwei Identifikations-Sendern (IS₁; IS₂) zu dem Objekt (1) diese mit mindestens einem Kommunikations-Element (KE₁) kommunizieren.

2. Anordnung nach Anspruch **1**, **dadurch gekennzeichnet, dass** das Steuerungs-Zentrum (SZ) mindestens zwei Kommunikationsnetzwerke (KN) zum Austausch der Kommunikations-Botschaften (KB₁, KB₂) verbindet.

3. Anordnung nach Anspruch 1 oder 2, **dadurch gekennzeichnet, dass** die weltweit eindeutige Kennung eine IP6-Adresse oder eine innerhalb einer Produktfamilie eindeutige Kennung ist.

4. Anordnung nach einem der Ansprüche 1 bis 3, **dadurch gekennzeichnet, dass** jeder vom Kommunikations-Element (KE₁, KE₂) empfangenen informationsbotschaft (IB₁, IB₂) des Identifikations-Sender (IS₁, IS₂) ein mit der UTC (Universal Time Coordinated) synchronisierter Zeiteingangsstempel zugeordnet ist, wobei die Abweichung von der UTC signifikant kleiner als der minimale Zeitabstand von zwei aufeinander folgenden Signalen eines Identifikations-Sender (IS₁, IS₂) ist.

5. Anordnung nach einem der Ansprüche 1 bis 4, **dadurch gekennzeichnet, dass** das Positionierungssystem die Geo-Position dem Kommunikations-Element (KE₁, KE₂) indirekt und statisch oder dynamisch mittels eines mit dem Kommunikations-Element (KE₁, KE₂) verbundenen GPS-Empfänger zuordnet.

6. Anordnung nach einem der Ansprüche 1 bis 5, **dadurch gekennzeichnet, dass** im Fall der Zuordnung von zwei Identifikations-Sendern (IS₁; IS₂) zu dem Objekt (1) der Identifikations-Sender (IS₁) zeitgleich mit dem Kommunikations-Elementen (KE₁) und (KE₂) drahtlos kommuniziert und der Identifikations-Sender (IS₂) für sich betrachtet ebenfalls zeitgleich mit den Kommunikations-Elementen (KE₁) und (KE₂) drahtlos kommuniziert.

7. Anordnung nach mindestens einem der Ansprüche 1 bis 6, **dadurch gekennzeichnet, dass** sie im Outdoor- oder Indoor-Bereich oder Outdoor zu Indoor oder umgekehrt kommuniziert.

8. Anordnung nach mindestens einem der Ansprüche 1 bis 7, **dadurch gekennzeichnet, dass** das Identifikations-Funk-Netz IF die Frequenzen 125 kHz bis 134 kHz, 13,56 MHZ, 850 MHz bis 950 MHz und/oder 2,45 GHz bis 2,5 GHz oder 5,8 GHz und das Kommunikationsnetz KN im Outdoor-Bereich Mobilfunk und im Indoor-Bereich WLAN nutzt.

9. Verfahren zur Identifikation und Ortung von Objekten, insbesondere von beweglichen Objekten wie Baugeräten und fahrbaren Maschinen und Ausrüstungen mit einer Anordnung gemäß den Ansprüchen 1 bis 6, **dadurch gekennzeichnet, dass**
- von einem an dem Objekt (1) angeordneten Informations-Sender (IS₁, IS₂) mit einer weltweit eindeutigen Kennung in periodischen Abständen Informationsbotschaften (IB₁, IB₂) gesendet werden;
- von jedem Kommunikations-Element (KE₁, KE₂) die in seinen Bereich gesendete Informationsbotschaft (IB₁, IB₂) empfangen werden;
- von dem Kommunikations-Element (KE₁, KE₂) jeder von ihm empfangenen Informationsbotschaft (IB₁, IB₂) ein Empfangszeitstempel zugeordnet wird;
- von dem Kommunikations-Element (KE_{I}, KE₂) auf der Grundlage der von einem oder mehreren Informations-Sendern (IS₁, IS₂) empfangenen Informationsbotschaften (IB1, IB₂) Kommunikationsbotschaften (KB₁, KB₂) erstellt werden und mit eindeutiger Kennung des Kommunikations-Elementes (KE₁, KE₂) und unter Zuordnung der jeweiligen Zeiteingangsstempel der Informationsbotschaften (IB₁, IB₂) an das Steuerungszentrum (SZ) gesendet werden;
- vom Steuerungs-Zentrum (SZ) auf der Grundlage der eindeutigen Senderkennung des Kommunikations-Elementes (KE₁,KE₂) in der Kommunikationsbotschaft (KB₁, KB₂), dem in der Kommunikationsbotschaft (KB₁, KB₂) enthaltenen Empfangszeitstempel der Informationsbotschaft (IB₁, IB₂) mittels des Positionierungssystems die zum Zeitpunkt des Empfanges der Informationsbotschaft (IB₁, IB₂) gültige Geo-Position des Kommunikations-Elementes (KE₁, KE₂) ermittelt wird, so dass das Tripel: Kennung des Informations-Senders (IS₁, IS₂), Zeitpunkt des Empfangs der Informationsbotschaft (IB₁, IB₂) und die Geo-Position des empfangenden Kommunikations-Elementes (KE₁, KE₂) festgestellt werden kann;
- vom Steuerungs-Zentrum (SZ) anschließend die Tripel korreliert und daraus die Position des Objektes (1) und/oder dessen Bewegungspfad bestimmt werden.

10. Verfahren nach Anspruch 9, **dadurch gekennzeichnet, dass** vom Kommunikation-Element (KE₁, KE₂) der von dem Informations-Sender (IS₁, IS₂) empfangenen Informationsbotschaft (IB₁, IB₂) weitere Informationen, vorzugsweise die maximale Reichweite der Kommunikation zwischen dem Informations-Sender (IS₁, IS₂) und dem Kommunikations-Element (KE₁ KE₂) oder die relative Empfangsfeldstärke zugeordnet werden.

11. Verfahren nach Anspruch 9 oder 10, **dadurch gekennzeichnet, dass** durch Berechnung von Bewegungsgeschwindigkeit und -richtung des Objektes (1) und die Auswertung der verschiedenen Empfangs-Zeitpunkte eine eventuelle Unschärfe der Geo-Position des Objektes (1) eingegrenzt wird.

12. Verfahren nach mindestens einem der Ansprüche 9 bis 11, **dadurch gekennzeichnet, dass** durch die Einbeziehung und Auswertung weiterer Parameter, vorzugsweise der maximalen Reichweite zwischen dem Informations-Sender (IS₁ IS₂) und Kommunikations-Element (KE₁, KE2) sowie der relativen Empfangsfeldstärke die Qualität der Positionsbestimmung verbessert wird.

13. Verfahren nach mindestens einem der Ansprüche 9 bis 12, **dadurch gekennzeichnet, dass** aus verschiedenen Empfangs-Zeitpunkten und Geo-Positionen des Kommunikations-Elementes (KE₁, KE₂) die
Bewegungsgeschwindigkeit und -richtung des Objektes (1) ermittelt und erforderlichenfalls die Geo-Position des Objektes (1) bestimmt wird.

14. Verfahren nach mindestens einem der Ansprüche 9 bis 13, **dadurch gekennzeichnet, dass** im Outdoor- oder Indoor-Bereich oder Outdoor zu Indoor oder umgekehrt kommuniziert wird.

15. Verfahren nach mindestens einem der Ansprüche 9 bis 14, **dadurch gekennzeichnet, dass** vom Identifikations-Funk-Netz IF die Frequenzen 125 kHz bis 134 kHz, 13,56 MHZ, 850 MHz bis 950 MHz und/oder 2,45 GHz bis 2,5 GHz oder 5,8 GHz und vom Kommunikationsnetz KN im Outdoor-Bereich Mobilfunk und im Indoor-Bereich WLAN genutzt werden.
